# EUROPÄISCHE PATENTSCHRIFT

(11) **EP 0 504 647 B1**
(45) Veröffentlichungstag und Bekanntmachung des Hinweises auf die Patenterteilung: **19.07.1995**
(21) Anmeldenummer: 92103560.6
(22) Anmeldetag: 02.03.1992
(51) Int. Cl.: B01D 3/00, B01D 3/34, B01D 1/16, F26B 21/08, C02F 1/04

(54) **Verfahren und Anlage zur Aufbereitung von Abfallflüssigkeiten, insbesondere von Industrieabwasser mit hohem Feststoffgehalt**
Method and installation for treatment of waste water, especially high-solids industrial waste water
Procédé et installation de traitement de liquide résiduaire, spécialement de l'industrie ayant une teneur élevée en solides

(30) Priorität: 21.03.1991 DE 4109276
(43) Veröffentlichungstag der Anmeldung: 23.09.1992
(73) Patentinhaber: Winter Umwelttechnik GmbH i.G., 20259 Hamburg (DE)
(72) Erfinder: Hörding, Dieter, Dr. Dipl.-Chem., W-2000 Norderstedt 1 (DE); Hellmann, Claus, W-2000 Hamburg 63 (DE)
(74) Vertreter: Patentanwälte Hauck, Graalfs, Wehnert, Döring, Siemons

(56) Entgegenhaltungen:
- DE-A- 3 121 561
- FR-A- 2 321 673
- US-A- 2 326 142
- US-A- 3 311 543
- US-A- 4 019 951

## Beschreibung

Die Erfindung bezieht sich auf ein Verfahren zur Aufbereitung von Feststoffe enthaltenden Abfallflüssigkeiten, insbesondere von Industrieabwasser.

Die Abwasseraufbereitung, insbesondere von Industrieabwasser, zwecks Trennung anorganischer und organischer Komponenten vom Wasser, die Wiederverwertung von Inhaltsstoffen und die Rückführung des Wassers in den Produktionskreislauf wird auf vielfältige Weise chemisch, biologisch oder aus einer Kombination dieser Verfahren gelöst. Nachteilig sind entweder der Eintrag neuer Chemikalien in das Wasser oder hohe Energiekosten. Die Aufbereitung von chemisch belasteten Industrieabwässern, beispielsweise von Galvanikbädern sowie die Deponierung von konzentrierten Schlämmen erfordern einen hohen Kosteneinsatz und die Anwendung umfangreicher kostenträchtiger Anlagen. Die Aufbereitung des anfallenden Wassers derart, daß eine Rückführung in das öffentliche Entsorgungsnetz stattfinden kann, ist ebenfalls mit hohen Kosten verbunden. Die anfallenden Schlämme sind sehr schwierig weiterzubearbeiten. Ihre Konzentration erfordert einen hohen Einsatz an Energie.

Der Erfindung liegt die Aufgabe zugrunde, ein energiearmes Verfahren zur Aufbereitung von Abfallflüssigkeiten, insbesondere von Industrieabwasser mit hohem Feststoffgehalt, anzugeben, bei dem die Feststoffe der Flüssigkeit als trockenes Konzentrat und das Wasser in reiner Form anfallen, ohne daß ein umweltbelastender Betrieb stattfindet.

Diese Aufgabe wird durch das erfindungsgemäße Verfahren mit den Merkmalen des Anspruchs 1 gelöst. Die Erfindung betrifft weiterhin eine Anlage gemäß dem Anspruch 3.

Bei der Erfindung wird das Abwasser in einen Sprühturm versprüht im Gegenstrom mit trockenem Gas, insbesondere trockener Luft. Sprühtürme zur Herstellung von Granulaten sind Stand der Technik. Zum Trocknen von Lebensmitteln oder pharmazeutischen Produkten ist auch bekannt, durch das aufgewirbelte Bett des Produktes warme (heiße) Luft zu schicken, die im Umlauf entfeuchtet und dem Kreislauf erneut zugeführt wird (DE-C-27 07 065). Ein ähnliches Verfahren ist zum sprühtrocknen von leicht verderblichen flüssigen Produkten, wie entrahmte Milch und Molke zur Gewinnung von Milchpulver bekanntgeworden (DE-A-27 43 724). Beim Sprühtrocknen findet normalerweise eine Verdampfung des Wassers statt, während beim erfindungsgemäßen Verfahren das im Sprühturm versprühte Wasser lediglich verdunstet. Aus der DE-A-3121561 ist weiterhin eine Einrichtung zur Lösemittel-Destillation bekannt, bei der das verdampfte Lösemittel zuerst über den Verdampfer und danach über den Kondensator einer Kälte maschine geleitet wird.

Erfindungswesentlich ist, daß das feuchte Gas im Wärmeaustausch mit dem Verdampfer einer Kältemaschine gebracht wird. Dadurch wird das Gas abgekühlt; die Feuchtigkeit wird kondensiert und aufgefangen. Das aufgefangene Wasser besitzt einen hohen Reinheitsgrad, das den von entionisiertem Wasser übertrifft. Eine Rückführung in ein Wassernetz zur Versorgung eines Industriebetriebes ist daher ohne weiteres möglich. Die Abführung des aufgefangenen Wassers in ein öffentliches Abwassernetz ist unbedenklich.

Die Kondensationswärme am Verdampfer führt zu einer Erwärmung des Kältemittels, das den Kondensator der Kältemaschine erwärmt. Die trockene entfeuchtete Luft gelangt in Wärmeaustausch mit dem Kondensator und wird dabei wiedererwärmt. Mit anderen Worten, die zur Abgabe der Feuchtigkeit dem feuchten Gasstrom entnommene Wärmeenergie (Kondensationswärme) wird auf diese Weise dem Gasstrom zurückgegeben. Die trockene leicht erwärmte Luft wird nunmehr wieder dem Sprühturm zugeführt, wobei ein Teil mit dem Aussprühen des Abwassers in den Sprühturm abgegeben wird und ein anderer Teil den Gegenstrom zum gesprühten Wasserstrom bildet.

Da im Gaskreislauf Energie nicht verloren geht, muß von außen nur die Energie zur Aufrechterhaltung des Gaskreislaufes sowie für den Motor der Kältemaschine und das Einspritzen des Abwassers in den Sprühturm aufgebracht werden. Der Wirkungsgrad des erfindungsgemäßen Verfahrens ist daher hoch.

Wie bereits erwähnt, hat das gewonnene Wasser eine hohe Qualität. Es weist keine Algen oder organischen Substanzen auf und gleicht in der Qualität etwa destilliertem Wasser. Die Feststoffe fallen als pulverförmiges Konzentrat an und können ohne weiteres einem Recyclingprozeß zugeführt werden. Aufgrund des trocken vorliegenden Konzentrats ist das Volumen minimal.

Beim erfindungsgemäßen Verfahren sind keine Chemikalien notwendig. Dadurch, daß der Prozeß im geschlossenen System abläuft, findet eine Umweltbelastung nicht statt.

Zur Umwälzung des Gasstroms muß mechanische Energie aufgewendet werden. Diese mechanische Energie wird dem Kreislauf als Wärmeenergie mitgeteilt, so daß unter Umständen sogar ein Überschuß an Wärme erhalten wird, der nach einer Ausgestaltung der Erfindung dazu verwendet werden kann, das Abwasser zu erwärmen, bevor es versprüht wird.

In Industriebetrieben fallen oft saure und alkalische Abwässer an. Das erfindungsgemäße Verfahren hat den Vorteil, daß eine getrennte Aufbereitung dieser Abwässer nicht notwendig ist, im Gegenteil, sie können vorteilhafterweise zusammengemischt und gemeinsam versprüht werden. Nach einer Ausgestaltung der Erfindung weist das versprühte Abwasser vorzugsweise einen pH-Wert von 7 bis 9 auf, d.h. es ist leicht alkalisch.

Eine Anlage zur Durchführung des erfindungsgemäßen Verfahrens setzt sich aus zwei Basisaggregaten zusammen, nämlich einem Sprühturm und einer Kältemaschine. Der Sprühturm weist eine Versprüheinrichtung im oberen Bereich auf, die mit einem Abwasserreservoir verbunden ist. In der Leitung zur Versprüheinrichtung sitzt eine geeignete motorgetriebene Pumpe. Es versteht sich, daß auch eine drucklose Vernebelung vorgenommen werden kann, z.B. mittels Ultraschall o. dgl. Die Kältemaschine, die vorzugsweise eine Kompressorkältemaschine ist, weist in üblicher Weise einen Verdampfer und einen Kondensator auf, die in der erfindungsgemäßen Anlage als Wärmeaustauscher für das Gas dienen, das im Kreislauf durch den Sprühturm geführt wird, um die versprühte Flüssigkeit zu verdunsten und die Feuchtigkeit als Kondensat abzuscheiden. Wie schon erwähnt, wird durch die Kombination des Sprühturms mit der Kältemaschine ein äußerst energiearmes Verfahren erhalten, das gleichzeitig eine optimale Aufbereitung der Flüssigkeit, z.B. Abwasser, gewährleistet bei größtmöglicher Schonung der Umwelt. Die Abmessungen der erfindungsgemäßen Anlage sind klein, so daß sie ohne weiteres in vorhandene Anlagen integriert werden kann. Die Kosten für die Herstellung der erfindungsgemäßen Anlage und ihr Betrieb sind ebenfalls denkbar niedrig.

Eine Anlage nach der Erfindung wird nachfolgend anhand von Zeichnungen näher erläutert.

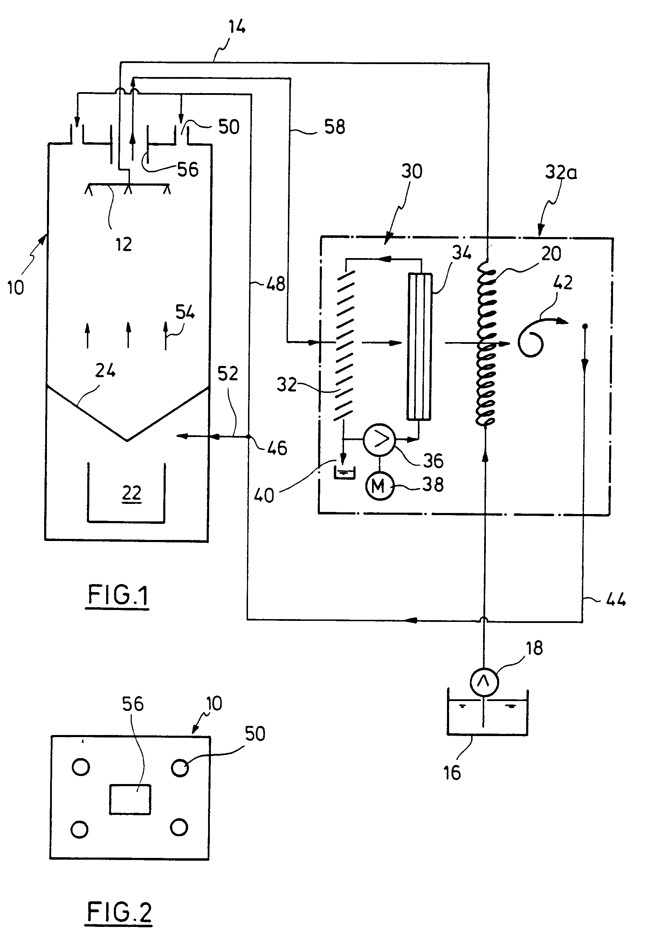

- Fig. 1: zeigt äußerst schematisch eine Anlage nach der Erfindung.
- Fig. 2: zeigt die Draufsicht auf einen Sprühturm der Anlage nach Fig. 1.

Ein Sprühturm 10 weist im oberen Bereich eine Versprüheinrichtung 12 auf, die über eine Leitung 14 mit einem Abwasserreservoir 16 verbunden ist. In der Leitung 14 sind eine Pumpe 18 sowie ein Wärmeaustauscher 20 angeordnet.

Im unteren Bereich des Sprühturms 10 befindet sich ein Auffangbehälter 22 für getrocknetes Feststoffkonzentrat. Oberhalb des Auffangbehälters 22 ist ein konisches Sieb 24 angeordnet.

Eine allgemein mit 30 bezeichnete Kältemaschine weist einen Verdampfer 32 in Lamellenform sowie einen Kondensator 34 in Form eines Fallrohrverdampfers auf. Die Kältemaschine 30 befindet sich in einem abgeschlossenen Raum, der strichpunktiert gezeichnet und mit 32a bezeichnet ist.Die Kältemaschine 30 weist in bekannter Weise einen Kompressor 36 auf, der von einem Motor 38 angetrieben ist. Dem Verdampfer 32 ist ein Kondensatablauf 40 zugeordnet. Im abgeschlossenen Raum 32a, in dem auch der Wärmeaustauscher 20 angeordnet ist, ist ein Radialgebläse 42 angeordnet, dessen Ausgang mit einer Leitung 44 verbunden ist, die zu einem Abzweigpunkt 46 führt. Vom Abzweigpunkt 46 ist eine Zweigleitung 48 zur Decke des Sprühturms 10 geführt und mit vier Eintrittsöffnungen 50 verbunden. Die zweite Abzweigleitung 52 führt in das Innere des Sprühturms 10 im unteren Bereich unterhalb des konischen Siebs 24.

Die beschriebene Anlage arbeitet wie folgt. Abwasser aus dem Reservoir 16 wird mit Hilfe der Sprühvorrichtung 12 im Sprühturm 10 versprüht und zusammen mit Luft aus der Leitung 48 eingeführt. Der von oben nach unten fließende "Sprühstrom" fließt im Gegenstrom zu trockener Luft, die über die Abzweigleitung 52 eingetragen wird. Ihre Strömung ist mit Pfeilen 54 dargestellt. Es versteht sich, daß geeignete Vorkehrungen getroffen sind, um einen innigen und gleichmäßigen Kontakt des Luftstroms 54 mit dem Sprühstrom zu erzielen. Die über die Leitungen 52 und 58 eingetragene trockene Luft hat zum Beispiel zunächst eine Temperatur von zum Beispiel 15 bis 18°C (Raumtemperatur). Sie enthält zudem zum Beispiel eine Feuchtigkeit von 1 g pro m³. Sie wird mit Feuchtigkeit beladen und verläßt den Sprühturm über eine obere mittige Öffnung 56 in der Decke des Sprühturms 10 und gelangt über eine Leitung 58 zur Kältemaschine 30. Die feuchte Luft, die beispielsweise eine Feuchtigkeit von 24 g pro m³ aufweist, wird im Wärmeaustausch über den Verdampfer 32 der Kältemaschine 30 geschickt. Hierbei kühlt sich die Luft ab und gibt durch Kondensierung das Wasser ab, das im Kondensatauffangbehälter 40 aufgefangen wird. Die kühle trockene Luft, die nunmehr wiederum einen Feuchtigkeitsgehalt von 1 g pro m³ aufweist, gelangt zum Kondensator 34 der Kältemaschine 30 und wird hier erwärmt, weil im Verdampfer 32 durch Kondensationswärme eine Erwärmung des Kältemittels stattgefunden hat, welche Wärme nunmehr im Wärmeaustausch an die trockene kühle Luft abgegeben wird.Die trockene Luft verläßt den Wärmeaustauscher 34 zum Beispiel mit einer Temperatur von 45°C. Sie gibt im Wärmeaustauscher 20 einen Teil ihrer Wärme ab, um das Abwasser in der Leitung 14 anzuwärmen. Die erwärmte trockene Luft gelangt dann über die Leitung 44 in der beschriebenen Weise zum Sprühturm 10 zurück.

Wie erkennbar, wird der Luftstrom in einem geschlossenen Kreislauf geführt, so daß eine Umweltbelastung nicht stattfindet. Eine Temperaturregelung kann durch Veränderung des Druckes stattfinden sowie durch eine Steuerung des Ausmaßes der Erwärmung des Abwassers. Ohne den Wärmeaustauscher 20 ließen sich relativ hohe Temperaturen für die trockene Luft erreichen, da die mechanische Energie, die für den Lüfter 42 aufzubringen ist, in Wärmeenergie umgesetzt wird.

Eine Erwärmung des Abwassers erleichtert indessen die Verdunstung des versprühten Abwassers, so daß eine Gesamtenergiebilanz erreichbar ist, die zu einem außerordentlich hohen Wirkungsgrad der Anlage führt, von etwa 85%.

Die erfindungsgemäße Anlage dient zum Beispiel zur Aufbereitung von Galvanikbädern. Das Abwasser ist zweckmäßigerweise so eingestellt, daß es leicht alkalisch ist. In jedem Fall können Säuren und Laugen gemeinsam aufbereitet werden. Allgemein können die verschiedensten flüssigen Phasen in der beschriebenen Art und Weise verarbeitet werden, z.B. Elektrolytrückgewinnung aus der Luft usw.

## Patentansprüche

1. Verfahren zur Aufbereitung von Feststoffe enhaltenden Abfallflüssigkeiten, insbesondere von Industrieabwasser, mit folgenden Verfahrensschritten:
a) die Abfallflüssigkeit wird zusammen mit trockenem Gas, insbesondere trockener Luft, in einem Sprühturm in den Gegenstrom aus trockenem Gas, insbesondere trockener Luft, gesprüht und verdunstet;
b) die Feststoffe der Abfallflüssigkeit werden im unteren Bereich des Sprühturms aufgefangen;
c) das feuchte Gas wird aus dem oberen Teil des Sprühturms abgezogen und in Wärmeaustausch mit dem Verdampfer einer Kältemaschine gebracht, wobei die am Verdampfer kondensierte Flüssigkeit aufgefangen wird;
d) das abgekühlte trockene Gas wird dann in Wärmeaustausch mit dem Kondensator der Kältemaschine gebracht und erwärmt und
e) das erwärmte trockene Gas wird im geschlossenen Kreislauf dem Verfahrensschritt a) rückgeführt.

2. Verfahren nach Anspruch 1, dadurch gekennzeichnet, daß das Abwasser vor dem Versprühen mit dem aus dem Kondensator der Kältemaschine austretenden Gas im Wärmeaustausch gebracht wird.

3. Anlage zur Durchführung des Verfahrens nach Anspruch 1 oder 2, gekennzeichnet durch folgende Anlageteile:
a) ein Sprühturm (10) mit einer Versprüheinrichtung (12) im oberen Bereich, die mit einem Abfallflüssigkeitsreservoir (16) verbunden ist;
b) eine einen Verdampfer (32) und einen Kondensator (34) enthaltende Kältemaschine (30), wobei dem Verdampfer (32) ein Kondensatwasserablauf (40) zugeordnet ist;
c) ein Leitungssystem für Gas, dessen Eintrittsende mit dem oberen Bereich des Sprühturms (10) und dessen verzweigtes Austrittsende sowohl mit dem oberen Bereich als auch zum unteren Bereich des Sprühturms (10) verbunden ist, wobei das Leitungssystem derart angeordnet ist, daß das Gas im geschlossenen System zwischen den Enden zumindest über den Verdampfer (32) und danach über den Kondensator (34) der Kältemaschine (10) geleitet wird;
d) ein Gebläse (42) im Leitungssystem zur Umwälzung des Gases im Kreislauf; und
e) ein Auffangbehälter (22) für Feststoffe im unteren Bereich des Sprühturms.

4. Anlage nach Anspruch 3, dadurch gekennzeichnet, daß das Gebläse ein Radialgebläse (42) ist.

5. Anlage nach Anspruch 3 oder 4, dadurch gekennzeichnet, daß der Verdampfer (32) der Kältemaschine (30) ein Lamellenkondensator (32) ist.

6. Anlage nach einem der Ansprüche 3 bis 5, dadurch gekennzeichnet, daß der Kondensator (34) der Kältemaschine (30) ein Fallrohrverdampfer ist.

7. Anlage nach einem der Ansprüche 3 bis 6, dadurch gekennzeichnet, daß dem Kondensator (34) der Kältemaschine (30) in Strömungsrichtung des Gases ein Wärmeaustauscher (20) nachgeschaltet ist, durch den das Abwasser zur Versprüheinrichtung (12) strömen kann.

## Claims

1. A method for processing waste liquid, in particular industrial waste water, comprising the following steps:
(a) Spraying and evaporating the waste liquid together with a dry gas, in particular dry air, in a counterflow of dry gas, in particular dry air in a spray tower,
(b) collecting the solids of the waste water in a lower section of the spray tower,
(c) discharging the moist gas from an upper section of the spray tower and bringing the moist gas in heat exchange with an evaporator of a refrigerating means, wherein the liquid condensed from the evaporator is collected,
(d) bringing the cooled dry gas in heat exchange with the condensor of said refrigerating means and heating it and
(e) returning the heated dry gas in a closed loop to the method step (a).

2. The method of claim 1, characterized by bringing the waste water into heat contact with the gas discharging from the condensor of the refrigerating means before the spraying step.

3. An apparatus for performing the method of claim 1 or 2, characterized by the following components:
(a) A spray tower (10) having an upper section including a spray means (12) which is connected to a waste water reservoir (16),
(b) a refrigerating means (30) including an evaporator (32) and a condensor (34), wherein a condensator drain (40) is associated to the evaporator (32),
(c) a line system for gas having an inlet which is connected to the upper section of the spray tower (10) and having a manifold outlet which is connected to the upper section as well as to the lower section of the spray tower (10), wherein the line system is arranged such that the gas is transmitted in a closed loop between the inlet and outlet at least via the evaporator (32) and thereafter via the condensor (34) of said refrigerating machine (10),
(d) a blower (42) in said line system for circulating said gas in a closed loop, and
(e) a collecting container (22) for solids in the lower section of the spray tower.

4. The apparatus of claim 3, characterized in that the blower is a radial blower (42).

5. The apparatus of claim 3 or 4, characterized in that the condensor (32) of the refrigerating machine (30) is a finned condensor (32).

6. The apparatus of one of claims 3 to 5, characterized in that the condensor (34) of the refrigerating machine (30) is a fall-pipe evaporator.

7. The apparatus of one of claims 3 to 6, characterized in that a heat exchanger (20) is provided downstream of the condensor (34) through which heat exchanger the waste water can flow to the spray means (12).

## Revendications

1. Procédé de retraitement de liquides résiduaires contenant des substances solides, en particulier d'eaux résiduaires d'origine industrielle, ledit procédé comprenant les étapes suivantes :
a) le liquide résiduaire est pulvérisé, avec du gaz sec, en particulier de l'air sec, dans une tour de pulvérisation, dans l'écoulement en sens contraire du gaz sec, en particulier air sec, et vaporisé ;
b) les substances solides du liquide résiduaire sont collectées dans la partie inférieure de la tour de pulvérisation ;
c) le gaz humide est extrait de la partie supérieure de la tour de pulvérisation et amené en échange thermique avec l'évaporateur d'une machine frigorifique, le liquide se condensant sur l'évaporateur étant collecté ;
d) le gaz sec refroidi est ensuite amené en échange thermique avec le condenseur de la machine frigorifique et réchauffé et
e) le gaz sec réchauffé est recyclé en circuit fermé vers l'étape a) du procédé.

2. Procédé selon la revendication 1, caractérisé en ce qu'avant la pulvérisation les eaux résiduaires sont amenées en échange thermique avec le flux de gaz sortant de la machine frigorifique.

3. Installation de mise en oeuvre du procédé selon la revendication 1 ou 2, caractérisé en ce qu'il comprend les parties suivantes :
a) une tour de pulvérisation (10) comportant dans sa partie supérieure un dispositif de pulvérisation (12), qui est relié à un réservoir (16) de liquide résiduaire ;
b) une machine frigorifique (30) comportant un évaporateur (32) et un condenseur (34), une évacuation (40) de condensats étant associée à l'évaporateur (32) ;
c) un système de tuyauteries de gaz, dont l'extrémité d'entrée est reliée à la partie supérieure de la tour de pulvérisation (10) et dont l'extrémité de sortie formant une bifurcation est reliée aussi bien avec la partie supérieure qu'avec la partie inférieure de la tour de pulvérisation (10), le système de tuyauteries étant disposé de manière telle que le gaz contenu dans le système fermé est acheminé entre les extrémités en passant au moins par l'évaporateur (32) puis par le condenseur (34) de la machine frigorifique (10) ;
d) une soufflante (42) située dans le système de tuyauteries, pour faire circuler le gaz en circuit fermé; et
e) un réservoir collecteur (22) pour substances solides, prévu dans la partie inférieure de la tour de pulvérisation.

4. Installation selon la revendication 3, caractérisée en ce que la soufflante est une soufflante radiale (42).

5. Installation selon la revendication 3 ou 4, caractérisée en ce que l'évaporateur (32) de la machine frigorifique (30) est un condenseur à faisceaux (32).

6. Installation selon l'une des revendications 3 à 5, caractérisée en ce que le condenseur (34) de la machine frigorifique (30) est un évaporateur à tuyauteries de chute.

7. Installation selon l'une des revendications 3 à 6, caractérisée en ce qu'un échangeur de chaleur (20), par lequel les eaux résiduaires peuvent s'écouler en direction du dispositif de pulvérisation (12) est monté en aval du condenseur (34) de la machine frigorifique (30), dans le sens de circulation du gaz.
